# EUROPÄISCHE PATENTSCHRIFT

(11) **EP 2 142 333 B1**
(45) Veröffentlichungstag und Bekanntmachung des Hinweises auf die Patenterteilung: **23.07.2014**
(21) Anmeldenummer: 08749843.2
(22) Anmeldetag: 29.04.2008
(51) Int. Cl.: B23K 26/08

(54) **VORRICHTUNG ZUM BEARBEITEN EINER OBERFLÄCHE EINES WERKSTÜCKS MITTELS LASERSTRAHLUNG**
APPARATUS FOR WORKING A SURFACE OF A WORKPIECE BY MEANS OF LASER RADIATION
DISPOSITIF DE TRAITEMENT D'UNE SURFACE D'UNE PIÈCE AU MOYEN D'UN RAYONNEMENT LASER

(30) Priorität: 03.05.2007 DE 102007020748
(43) Veröffentlichungstag der Anmeldung: 13.01.2010
(60) Teilanmeldung: 13195073.5
(73) Patentinhaber: Clean Lasersysteme GmbH, 52134 Herzogenrath (DE)
(72) Erfinder: BARKHAUSEN, Winfried, 52074 Aachen (DE); BÜCHTER, Edwin, 52134 Herzogenrath (DE)
(74) Vertreter: Müller & Schubert
(86) Internationale Anmeldenummer: PCT/EP2008/055237
(87) Internationale Veröffentlichungsnummer: WO 2008/135455

(56) Entgegenhaltungen:
- WO-A-2005/122694
- DE-A1- 10 228 743
- GB-A- 2 215 859
- US-A- 5 601 737
- US-B1- 6 696 667
- BÖHM S. ET AL: "Laser based surface treatment of aluminium alloys for adhesive bonding" ICEPAM 2004, [Online] 18. Juni 2004 (2004-06-18), XP002493109 Gefunden im Internet: URL:http://www.sintef.no/static/mt/norligh t/ICEPAM/24-Bohm_Braunschweig.pdf> [gefunden am 2008-08-22]

## Beschreibung

Die vorliegende Erfindung betrifft eine Vorrichtung zum Bearbeiten einer Oberfläche eines Werkstücks, insbesondere eines metallischen Werkstücks, mittels Laserstrahlung sowie eine Laserbearbeitungseinrichtung zum Bearbeiten eines Werkstücks mittels Laserstrahlung.

In den letzten Jahren ist die Bandbreite der Möglichkeiten, Werkstücke mittels Laserstrahlung zu bearbeiten, immer größer geworden. Insbesondere werden Laser in vielfältiger Weise eingesetzt, um Oberflächen von Werkstücken zu bearbeiten. Beispielsweise ist aus der DE 10 2004 059 260 A1 ein Verfahren bekannt, bei dem die oberflächennahe Schicht eines metallischen Werkstücks unter Verwendung von Laserstrahlung aufgeschmolzen und anschließend wieder abgekühlt wird. Dadurch kommt es zu Gefügeumwandlungen, was beispielsweise verbesserte mechanische Eigenschaften der Oberfläche des Werkstücks zur Folge hat. Aus der DE 102 28 743 B4 ist ein ähnliches Verfahren bekannt, mittels dessen die Oberflächen eines Werkstücks geglättet und poliert werden können. Um dies zu erreichen, werden insbesondere gepulste Laser eingesetzt. Ebenso ist es bereits bekannt, Oberflächen mittels Laserstrahlung zu reinigen. Dabei werden auf der Oberfläche befindliche Verunreinigungen entfernt, indem diese beispielsweise abgeschmolzen, verdampft oder abgesprengt werden.

Damit das von einer Laserquelle erzeugte Laserlicht auf die Oberfläche eines zu bearbeitenden Werkstücks auftreffen kann, kommen Laserbearbeitungseinrichtungen zum Einsatz, die im Stand der Technik ebenfalls in vielfältiger Weise bekannt sind. Üblicherweise verfügen Laserbearbeitungseinrichtungen neben einer Laserquelle zum Erzeugen eines Laserstrahls auch über eine Bearbeitungsvorrichtung zum gezielten Ablenken und Positionieren des Laserstrahls auf das zu bearbeitende Werkstück. Diese Bearbeitungsvorrichtungen können je nach Einsatzgebiet auf unterschiedliche Weise ausgebildet sein.

Beispielsweise ist in der DE 197 07 834 A1 eine Laserbearbeitungseinrichtung beschrieben, mittels derer ein Laserstrahl unter Verwendung eines Strahlteilers in zwei oder mehr Teilstrahlen aufgeteilt werden kann. Mit der bekannten Lösung ist es insbesondere vorgesehen, gleichartige Anordnungen nebeneinander zu platzieren, die dann gleichzeitig parallel bearbeitet werden können.

Mit der bekannten Lösung ist es allerdings nur möglich, einfache flächige Oberflächen zu bearbeiten. Komplizierte Geometrien, wie beispielsweise Nuten oder dergleichen, oder aber eine Kurvenführung beziehungsweise eine Laufrichtungsänderung der Bearbeitungsvorrichtung ist bisher nicht problemlos möglich. Ebenso ist es mit den bekannten Lösungen bislang nicht möglich, jede Art von Oberflächenbearbeitung durchzuführen. Dies gilt insbesondere für eine Vorbehandlung von Klebeflächen.

Der vorliegenden Erfindung liegt die Aufgabe zugrunde, eine Vorrichtung zur Bearbeitung einer Oberfläche eines Werkstücks mittels Laserstrahlung bereitzustellen, mit dem die genannten Nachteile vermieden werden können. Insbesondere soll es ermöglicht werden werden, metallische Oberflächen, die als Klebeflächen fungieren sollen, in geeigneter Weise vorzubehandeln, wobei gleichzeitig auch komplizierte Geometrien bearbeitet werden sollen.

Diese Aufgabe wird erfindungsgemäß gelöst durch die Bearbeitungsvorrichtung mit den Merkmalen gemäß dem Patentanspruch 1, die Laserbearbeitungseinrichtung mit den Merkmalen gemäß dem Patentanspruch 9, sowie die besondere Verwendung gemäß dem Patentanspruch 13. Weitere Merkmale und Details der Erfindung ergeben sich aus den Unteransprüchen, der Beschreibung sowie den Zeichnungen. Merkmale und Details, die im Zusammenhang mit der erfindungsgemäßen Bearbeitungsvorrichtung beschrieben sind, gelten dabei selbstverständlich auch im Zusammenhang mit der erfindungsgemäßen Laserbearbeitungseinrichtung, und umgekehrt. Analoges gilt für die erfindungsgemäße Verwendung.

Gemäß dem ersten Aspekt der Erfindung wird eine Vorrichtung zum Bearbeiten einer Oberfläche eines Werkstücks, insbesondere eines metallischen Werkstücks, bereitgestellt, wobei die Bearbeitung mittels Laserstrahlung erfolgt. Erfindungsgemäß ist die Bearbeitungsvorrichtung gekennzeichnet durch eine in der Bearbeitungsvorrichtung drehunbeweglich montierte Scannereinrichtung sowie ein um eine Rotationsachse bewegliches Optikelement, mittels derer ein auf die zu bearbeitenden Oberfläche abzulenkender und zu positionierender Laserstrahl mit einer definierten Laserstrahlgeometrie formbar ist, wobei das Optikelement der Scannereinrichtung in Strahlrichtung des Laserstrahls nachgeordnet ist. Weiterhin ist eine Steuereinrichtung zum Verändern der Orientierung der Scannrichtung der Strahlablenkung des Laserstrahls in Übereinstimmung mit der Rotation des Optikelements vorgesehen.

Die erfindungsgemäße Bearbeitungsvorrichtung besteht aus verschiedenen Grundkomponenten. Dabei handelt es sich um eine Scannereinrichtung und ein Optikelement. Diese haben die Funktion, einen auf die zu bearbeitende Oberfläche abzulenkenden und zu positionierenden Laserstrahl zu formen. Die Scannereinrichtung dient zur Strahlablenkung des Laserstrahls. Das Optikelement dient zur Strahlumlenkung und zur Fokussierung des Laserstrahls. Durch die Scannereinrichtung wird der Laserstrahl in erster Linie auf die zu bearbeitende Oberfläche abgelenkt. Das Optikelement dient in erster Linie zur Strahlumlenkung und zur weiteren Positionierung des Laserstrahls auf der zu bearbeitenden Oberfläche. Durch beide Grundkomponenten wird der für die Bearbeitung des Werkstücks zur Verfügung stehende Laserstrahl geformt, wobei dieser erfindungsgemäß eine definierte Laserstrahlgeometrie aufweist. Beide Grundkomponenten sind für die tatsächliche Positionierung des Laserstrahls auf der zu bearbeitenden Oberfläche verantwortlich, wobei jedoch die Scannereinrichtung feststehend, und das Optikelement rotierbar ist. Zum Betrieb der Scannereinrichtung ist diese mit verschiedenen Bauelementen, wie beispielsweise einer Laserquelle, einer Steuereinheit oder dergleichen, verbunden. Dies wird in der Regel über Kabel, Leiter, beispielsweise Spiegel oder Lichtleiter, und dergleichen realisiert. Wenn die Bearbeitungsvorrichtung Konturen abfahren und dabei auch die Laufrichtung ändern soll, müsste sich eigentlich auch die Scannereinrichtung mit verdrehen, damit der geformte Laserstrahl, der beispielsweise linienförmig auf die zu bearbeitenden Oberfläche auftreffen kann, bei einer Laufrichtungsänderung auch linienförmig und in der gleichen Ausrichtung bleibt. Dies ist aber sehr nachteilig, weil dadurch die oben genannten Verbindungen beschädigt werden könnten, beispielsweise, indem Kabeloder Leiterpakete tordiert werden Um diesen Nachteil zu umgehen, ist erfindungsgemäß zunächst vorgesehen, dass die Scannereinrichtung in der Bearbeitungsvorrichtung drehunbeweglich montiert ist. Das bedeutet, dass die Scannereinrichtung innerhalb der Bearbeitungsvorrichtung nicht verdreht oder rotiert werden kann, so dass sich im Hinblick auf eine durchzuführende Drehbewegung die Positionierung der Scannereinrichtung in Bezug auf die Bearbeitungsvorrichtung nicht verändern kann. Die Scannereinrichtung für sich allein kann somit nicht unabhängig von der Bearbeitungsvorrichtung verdreht beziehungsweise rotiert werden. Denkbar wäre allerdings, dass die Scannereinrichtung lateral bewegt werden kann. Wichtig ist lediglich, dass eine Drehbewegung und damit Rotation der Scannereinrichtung vermieden wird, wodurch es andernfalls zu den oben beschriebenen nachteiligen Torsionen der Kabel- oder Leiterpakete kommen könnte.

Natürlich kann die Position der Scannereinrichtung in Bezug auf die Werkstückoberfläche verändert werden. Dies ist aber nur möglich, wenn die Position der gesamten Bearbeitungsvorrichtung verändert wird. Beispielsweise kann die Bearbeitungsvorrichtung auf einer Bearbeitungsführung montiert sein, die in geeigneter Weise in Längsrichtung und/oder Querrichtung zur Werkstückoberfläche verfahren wird. Dabei ist die Bearbeitungsführung vorteilhaft aber nicht notwendigerweise derart ausgestaltet, dass diese selbst keine Rotation ausführen kann.

Um nun aber doch eine Nachführung des geformten Laserstrahls zu erreichen, wenn beispielsweise Kurven auf der Oberfläche des Werkstücks abgefahren werden und eine Änderung der Laufrichtung der Bearbeitungsvorrichtung auftritt, ist erfindungsgemäß zunächst vorgesehen, dass die Orientierung der Scannrichtung der Strahlablenkung des Laserstrahls verändert werden kann. Dies wird mittels einer Steuereinrichtung realisiert. Wenn nun ein kurvenförmiger Verlauf gefahren werden soll, wird die Scannereinrichtung an sich nicht verdreht, sondern nur die Orientierung der Scannrichtung des Laserstrahls. Dies wird insbesondere dadurch erreicht, dass die Ablenkbahn des geformten Laserstrahls verändert wird, beispielsweise, indem die Position von in der Scannereinrichtung vorhandenen Spiegeln verändert wird. Dies kann vorteilhaft durch geeignete Programmmittel geschehen, die auf der Steuereinrichtung ablaufen und vorzugsweise in dieser implementiert sind.

Schließlich weist die Bearbeitungsvorrichtung erfindungsgemäß noch ein um eine Rotationsachse bewegliches Optikelement auf. Für eine Kurvenfahrt erforderliche Rotationen werden also nur von dem rotierbaren Optikelement durchgeführt. Zunächst zeichnet sich dieses Optikelement dadurch aus, dass es der Scannerereinrichtung in Strahlrichtung des Laserstrahls nachgeordnet ist. Weiterhin verfügt das Optikelement über Mittel zum Ablenken und Positionieren des Laserstrahls auf die zu bearbeitende Oberfläche. Die Erfindung ist nicht auf bestimmte Ausgestaltungsformen für das Optikelement beschränkt. Im weiteren Verlauf werden hierzu einige vorteilhafte, jedoch nicht ausschließliche Beispiele, näher erläutert. Vorteilhaft kann es sich bei dem Optikelement um eine Rotationsoptik mit Spiegelumlenkung handeln. Bei den einzusetzenden Mitteln kann es sich beispielsweise um besondere Spiegel oder Spiegelanordnungen handeln. Denkbar ist beispielsweise auch eine Strahlteilereinrichtung zum Aufteilen des Laserstrahls in zwei oder mehr Teilstrahlen und zum Ablenken und Positionieren der Teilstrahlen auf die zu bearbeitende Oberfläche.

Erfindungsgemäß ist nun vorgesehen, dass die Orientierung der Scannrichtung der Strahlablenkung des Laserstrahls in Übereinstimmung mit der Rotation des Optikelements erfolgt. Das bedeutet, dass die Veränderung der Orientierung der Scannrichtung und die Rotation des Optikelements in einem definierten Verhältnis zueinander stehen. Das kann beispielsweise erreicht werden, indem diese miteinander kombiniert oder gekoppelt werden. Über dieses definierte Verhältnis lassen sich die Strahlablenkungsgeschwindigkeit, die Strahlablenkungsbreite und die Strahlablenkungsgeometrie des Laserstrahls beeinflussen, insbesondere auch dann, wenn der Laserstrahl der Kontur / dem Verlauf der zu bearbeitenden Oberfläche nachgeführt werden soll.

Durch die erfindungsgemäße Bearbeitungsvorrichtung wird es zum einen möglich, komplexere Konturen mittels Laserstrahlung zu bearbeiten. Insbesondere wird es möglich, dass die Bearbeitungsvorrichtung während eines Bearbeitungsgangs die Laufrichtung ändert, wodurch insbesondere auch Kurvenfahrten möglich werden. Durch die erfindungsgemäße Bearbeitungsvorrichtung wird somit eine Möglichkeit geschaffen, wie der Laserstrahl in besonders vorteilhafter Weise entsprechend der Kontur /des Verlaufs einer zu bearbeitenden Oberfläche nachgeführt werden kann.

Bei der erfindungsgemäßen Bearbeitungsvorrichtung ist die Scannereinrichtung feststehend. Nur das Optikelement kann sich drehen, wobei vorzugsweise eine Drehung um die Austrittsachse der Scannereinrichtung realisiert ist. Wenn die Bearbeitungsvorrichtung nun eine Kurve fahren soll, dreht sich zum einen das Optikelement, und damit auch der beziehungsweise die von diesem auf die Oberfläche des Werkstücks abgestrahlte Laserstrahl beziehungsweise Laserstrahlen. Zusätzlich wird die Orientierung des in der Scannereinrichtung geformten Laserstrahls verdreht, so dass sich die Bearbeitungsparameter - insbesondere die Orientierung der Strahlablenkung bezogen auf die Bearbeitungskontur - sowohl während der Kurvenfahrt wie auch nach erfolgter Kurvenfahrt nicht verändern und stets gleich bleiben.

Eine derartige Bearbeitungsvorrichtung kann für unterschiedlichste Anwendungen eingesetzt werden. Besonders vorteilhaft ist es möglich, mit der Bearbeitungsvorrichtung Fügekanten von Gehäuseteilen mittels Laser zu reinigen, damit nachfolgend ein Klebeprozess durchgeführt werden kann. Derartige Bauteile verfügen in der Regel über eine umlaufende Klebefläche, die teilweise als eine Art "Nut" und teilweise als eine Art "Steg" oder "Feder" ausgebildet ist. Eine Reinigung muss dann auf beiden Flanken der Nut oder des Stegs, und auch auf dem Nutgrund beziehungsweise dem Steggrat durchgeführt werden. Durch die erfindungsgemäße Bearbeitungsvorrichtung ist dies nunmehr problemlos möglich. Die erfindungsgemäße Bearbeitungsvorrichtung eignet sich somit in besonderer Weise zur Laserbearbeitung von Klebeflächen.

Durch die Einstellung geeigneter Verfahrensparameter wird es überdies auch möglich, eine gewünschte Verbesserung der Klebefestigkeiten der bearbeiteten Oberfläche zu erzielen. Dies wird insbesondere dadurch erreicht, dass die Alterungsbeständigkeit der bearbeiteten Oberfläche, beispielsweise einer Aluminiumoberfläche, verbessert wird, indem durch den Laserstrahl mit seinen geeigneten Parametern ein vollständiges Umschmelzen der oberflächennahen Schicht hervorgerufen wird. Dies wir in größerem Detail im Zusammenhang mit dem erfindungsgemäßen Verfahren weiter unten beschrieben, so dass auf die entsprechenden Ausführungen vollinhaltlich Bezug genommen und verwiesen wird.

Dabei ist die Erfindung grundsätzlich nicht auf bestimmte Materialien, die bearbeitet werden können, beschränkt. Besonders vorteilhaft können jedoch metallische Bauteile bearbeitet werden, insbesondere Bauteile aus Aluminium beziehungsweise mit Aluminiumoberflächen, Bauteile aus Magnesium beziehungsweise mit Magnesiumoberflächen, Bauteile aus Leichtmetallen im Allgemeinen, oder dergleichen.

Auch ist die vorliegende Erfindung nicht auf die Bearbeitung bestimmter Geometrien beschränkt. Vorteilhaft kann es sich bei den bearbeiteten Oberflächen um als Nuten, Federn, Stege und dergleichen ausgebildete Bereiche handeln. Allerdings sind auch einfach konturierte Oberflächen, flache Oberflächen, rohrförmige Erzeugnisse im Innern und Außen, dass Innere von Formen und der gleichen bearbeitbar. Eine Bearbeitung kann dabei horizontal und/oder vertikal erfolgen.

Die erfindungsgemäße Bearbeitungsvorrichtung kann auch wie folgt beschrieben werden. Demgemäß wird eine Vorrichtung zum Bearbeiten einer Oberfläche eines Werkstücks, insbesondere eines metallischen Werkstücks, bereitgestellt, wobei die Bearbeitung mittels Laserstrahlung erfolgt. Erfindungsgemäß ist die Bearbeitungsvorrichtung gekennzeichnet durch eine in der Bearbeitungsvorrichtung drehunbeweglich montierte Scannereinrichtung zum Formen eines auf die zu bearbeitende Oberfläche abzulenkenden und zu positionierenden Laserstrahls, eine Steuereinrichtung zum Verändern der Orientierung der Scannrichtung des in der Scannereinrichtung geformten Laserstahls, und ein um eine Rotationsachse bewegliches Optikelement, welches der Scannerereinrichtung in Strahlrichtung des Laserstrahls nachgeordnet ist und welches Mittel zum Ablenken und Positionieren des Laserstrahls auf die zu bearbeitende Oberfläche aufweist.

Grundsätzlich ist es für die vorliegende Erfindung ausreichend, wenn ein einziger Laserstrahl geformt wird, der als Ganzes auf der zu bearbeitenden Oberfläche auftrifft. Vorteilhaft kann allerdings auch vorgesehen sein, dass das Optikelement eine Strahlteilereinrichtung aufweist, die zum Aufteilen des Laserstrahls in zwei oder mehr Teilstrahlen und zum Ablenken und Positionieren der Teilstrahlen auf die zu bearbeitende Oberfläche ausgebildet ist. Vorteilhaft kann die Strahlteilereinrichtung zwei oder mehr Umlenkelemente aufweisen. Dabei kann vorteilhaft wenigstens ein Umlenkelement als teildurchlässiges Umlenkelement ausgebildet sein. Vorteilhaft kann weiterhin wenigstens ein Umlenkelement als vollständig umlenkendes Umlenkelement ausgebildet sein.

Dies soll anhand der Bearbeitung einer stegartig ausgebildeten Oberfläche erläutert werden, wobei beide Flanken des Stegs bearbeitet werden sollen. Zum einen ist es möglich, dass die Bearbeitungsvorrichtung zwei Umläufe macht, wobei bei jedem Umlauf eine Flanke des Stegs bearbeitet wird. In diesem Fall ist es ausreichend, wenn nur ein einziger Laserstrahl zur Verfügung steht. Wenn beispielsweise nur ein Umlauf erfolgen soll, ist es vorteilhaft, den Laserstrahl in zwei Teilstrahlen aufzuteilen, wobei jeder Teilstrahl auf eine der Stegflanken gerichtet wird, so dass beide Flanken gleichzeitig bearbeitet werden können. In diesem Fall ist darauf zu achten, dass die Teilstrahlen jeweils über die erforderliche Intensität verfügen.

In weiterer Ausgestaltung ist vorteilhaft vorgesehen, dass die Strahlteilereinrichtung zum Aufteilen des Laserstrahls in zwei Teilstrahlen gleicher Intensität ausgebildet ist. Wenn beispielsweise eine nutförmige, federförmige beziehungsweise stegförmige Oberfläche bearbeitet werden soll, wird in einem solchen Fall sichergestellt, dass beide Seiten der Flanken beziehungsweise beide Wände von einem Teilstrahl überstrichen werden, und dass eine gleichmäßige Bearbeitung stattfinden kann, da beide Teilstrahlen die gleiche Intensität haben. Natürlich ist es auch möglich, dass die Teilstrahlen mit unterschiedlichen Intensitäten erzeugt werden. Dies ist insbesondere dann vorteilhaft, wenn die Teilstrahlen mit unterschiedlichen Einstrahlwinkeln auf die Oberfläche appliziert werden. Durch die unterschiedlichen Einstrahlwinkel und die damit verbundenen unterschiedlichen Fokusdurchmesser auf der Oberfläche ergibt sich dann aufgrund der asymmetrisch angepassten Intensitäten bei den geteilten Teilstrahlen - unter Berücksichtigung der unterschiedlichen Einstrahlwinkel - wieder eine identische Intensität auf den zu bearbeitenden Oberflächen, beispielsweise den Nut-/Federflächen.

Vorteilhaft ist vorgesehen, dass die Bearbeitungsvorrichtung zur Bewegung des Optikelements eine Motoreinrichtung aufweist. Dabei ist die Erfindung nicht auf bestimmte Motorbauweisen beschränkt. Vorteilhaft kann vorgesehen sein, dass die Motorreinrichtung einen Stator aufweist. An diesem Stator kann vorzugsweise die Scannereinrichtung befestigt sein, so dass diese fest und somit unbeweglich in der Bearbeitungsvorrichtung angeordnet ist. Weiterhin verfügt die Motoreinrichtung in einem solchen Fall auch über einen Rotor, der mit dem Optikelement verbunden ist. Bei einer Betätigung der Motoreinrichtung kann dann das Optikelement verdreht werden, während die Scannereinrichtung in einer fixierten Position verbleibt. Vorteilhaft kann die Motoreinrichtung nach dem so genannten Innenläuferprinzip ausgestaltet sein was bedeutet, dass der Rotor innen, und der Stator außen liegt.

Durch die Verwendung einer solchen Motoreinrichtung kann insbesondere ein sehr günstiger Aufbau der Bearbeitungsvorrichtung erzielt werden. Dabei können die einzelnen Bauteile entlang einer gemeinsamen Achse ausgerichtet werden. Beispielsweise kann vorgesehen sein, dass in Strahlrichtung des Laserstrahls zunächst die Scannereinrichtung vorgesehen ist, die am Stator der nachfolgenden Motoreinrichtung angeordnet, beispielsweise angeflanscht, ist. In Strahlrichtung nachgeordnet, und damit an der anderen Seite der Motoreinrichtung, ist dann das Optikelement vorgesehen, welches am Rotor, und damit drehbar, angeordnet, beispielsweise angeflanscht, ist. In einem solchen Fall muss die Motoreinrichtung derart ausgebildet sein, dass der Laserstrahl von der Scannereinrichtung durch die Motoreinrichtung hindurchgeführt werden kann, um zum Optikelement zu gelangen.

Vorzugsweise weist die Scannereinrichtung wenigstens einen Anschluss zu wenigstens einer Laserquelle auf. Über einen entsprechenden Leiter, der dann über den Anschluss mit der Scannereinrichtung verbunden ist, kann dann das Laserlicht von einer Laserquelle zu der Scannereinrichtung hingeführt und anschließend in dieser zu dem gewünschten Laserstrahl geformt werden.

Damit die im Optikelement erzeugten Teilstrahlen auch auf die Oberfläche des Werkstücks gerichtet werden können ist vorteilhaft vorgesehen, dass das Optikelement zum Abstrahlen und Positionieren der Teilstrahlen auf der Werkstückoberfläche voneinander beabstandete Abstrahlköpfe aufweist. Wenn zwei Teilstrahlen erzeugt werden sollen, sind vorteilhaft zwei solcher Abstrahlköpfe vorgesehen. Beispielsweise kann vorgesehen sein, dass die Abstrahlköpfe an entsprechenden Armen angeordnet sind. Allerdings sind auch andere Ausgestaltungsvarianten denkbar, beispielsweise eine umlaufende kreisförmige Kontur, an der die Abstrahlköpfe, in der gewünschten Anzahl, angeordnet sind.

Vorzugsweise kann bei zwei oder mehr Teilstrahlen deren Fokuslage relativ zum Schnittpunkt der Einzelstrahlen variierbar sein. Dazu ist vorteilhaft vorgesehen, dass die Fokuslage der Teilstrahlen relativ zum Schnittpunkt der Teilstrahlen variierbar einstellbar ist. Hierzu weist die Bearbeitungsvorrichtung vorzugsweise Mittel-insbesondere optische Mittel - zur variierbaren Einstellung der Fokuslage der einzelnen Teilstrahlen relativ zum Schnittpunkt der Teilstrahlen auf. Die Betätigung der Mittel kann beispielsweise über eine geeignete Steuereinrichtung, etwa eine wie weiter oben oder weiter unten erwähnte Steuereinrichtung, erfolgen. Unter der Fokuslage wird dabei der Ort der höchsten Intensität beziehungsweise der Ort des Punktes der minimalen Strahlausdehnung verstanden. Beispielsweise kann vorgesehen sein, dass die Fokuslage auf den Schnittspunkt der Einzel-Teilstrahlen eingestellt ist. Je nach Anwendungsfall kann es aber auch vorteilhaft sein, wenn sich die Fokuslage etwas vor, oder aber etwas hinter dem Schnittpunkt der Einzelstrahlen befindet. Dies soll anhand einiger Beispiele verdeutlicht werden. Die entsprechende Einstellung erfolgt in der Regel danach, wie das Bauteil im Bereich der zu bearbeitenden Oberfläche ausgebildet beziehungsweise ausgestaltet ist. Wenn beispielsweise ein Steg bearbeitet werden soll, ist es vorteilhaft, wenn sich die Fokuslage der beiden Teilstrahlen vor dem Schnittpunkt der beiden Einzelstrahlen befindet. Wenn beispielsweise eine Nut bearbeitet werden soll, ist es vorteilhaft, wenn sich die Fokuslage hinter dem Schnittpunkt der Einzelstrahlen befindet. Natürlich gibt es auch Anwendungen, in denen es vorteilhaft ist, wenn sich die Fokuslage im Schnittpunkt der Einzelstrahlen befindet. Vorzugsweise wird die Fokuslage derart eingestellt, beziehungsweise ist die Fokuslage derart einstellbar, dass sich der Fokus unmittelbar auf der zu bearbeitenden Oberfläche, etwa einer Bauteiloberfläche, befindet.

Wenn wie weiter oben beschrieben beispielsweise ein auf einer Bauteiloberfläche ausgebildeter Steg des Bauteils bearbeitet werden soll, befindet sich der Schnittpunkt der beiden Teilstrahlen innerhalb des Bauteils. Nämlich innerhalb des Stegs. Wenn beispielsweise eine in einer Bauteiloberfläche ausgebildete Nut bearbeitet werden soll, befindet sich der Schnittpunkt der beiden Teilstrahlen außerhalb des Bauteils. Durch die variierbare Einstellung der Fokusfage relativ zum Schnittpunkt der Teilstrahlen kann sichergestellt werden, dass der Ort der höchsten Intensität, das heißt die Fokuslage, immer auf die zu bearbeitende Oberfläche eingestellt werden kann, beispielsweise auf die Wände des Stegs oder der Nut.

In weiterer Ausgestaltung kann vorteilhaft vorgesehen sein, dass der Schnittpunkt der einzelnen Teilstrahlen auf beziehungsweise in der Rotationsachse des Optikelements liegt. Dazu ist vorzugsweise vorgesehen, dass die Teilstrahlen derart ausgerichtet sind, dass deren Schnittpunkt in beziehungsweise auf der Drehachse des Optikelements liegt. Vorteilhaft weist die Bearbeitungsvorrichtung in einem solchen Fall ein Optikelement mit einer Strahlteilereinrichtung auf, die zum Aufteilen des Laserstrahls in zwei oder mehr Teilstrahlen, deren Schnittpunkt auf beziehungsweise in der Rotationsachse beziehungsweise Drehachse des Optikelements liegt, ausgebildet ist.

Vorteilhaft kann das Optikelement zur zentrischen oder azentrischen Überlagerung der Teilstrahlen ausgebildet sein. Bei zwei oder mehreren Teilstrahlen ist es vorteilhaft, diese auf einen gemeinsamen Arbeitspunkt zu überlagern. Hierdurch können in einem einzigen Arbeitschritt beide Seiten beziehungsweise Flanken einer Nut beziehungsweise eines Steges bearbeitet werden, wodurch die für die Bearbeitung notwendige Zeit signifikant verkürzt werden kann. Bei einer - bezogen auf die Rotationsachse - zentrischen Überlagerung der Teilstrahlen wird die Bearbeitungsoptik von der Bearbeitungsführung mittig über die zu bearbeitende Kontur wie zum Beispiel Geradenstücke oder Kurvenstücke gerührt. Es ist auch eine - bezogen auf die Rotationsachse - azentrische Überlagerung der Teilstrahlen möglich, wobei vorzugsweise die Verschiebung des Auftreffpunktes dem Radius der zu bearbeitenden Kurvenstücke entspricht. Durch diese Ausgestaltung wird die Bearbeitung derart vereinfacht das Geradenstücke ausschließlich durch eine Lateralbewegung der Bearbeitungsführung und Kurvenstücke ausschließlich durch die Rotation der Bearbeitungsoptik ausgeführt werden. Eine Kombination der Lateralbewegung der Bearbeitungsführung mit der Rotation der Bearbeitungsoptik ist ebenfalls möglich, um hierdurch beispielsweise eine kontinuierlichen Übergang der Bearbeitung beim Wechsel zwischen Geradenstücken und Kurvenstücken beziehungsweise beim Wechsel zwischen Kurvenstücken und Geradenstücken zu ermöglichen.

Vorzugsweise kann das Optikelement zum Variieren des Einstrahlwinkels der Laser-Teilstrahlen auf der Werkstückoberfläche im Bereich von 0 bis 90 Grad zur Oberflächen-Normalen ausgebildet sein. Damit kann ein auf die zu bearbeitenden Oberflächen, Geometrien und Konturen optimal abgestimmter Einstrahlwinkel erzeugt werden. In Abhängigkeit des Einfallswinkels kann weiterhin auch eine lokale Anpassung der Intensität vorgenommen werden.

Durch die erfindungsgemäße Bearbeitungsvorrichtung können eine Reihe von Vorteilen realisiert werden. Neben den bereits geschilderten Vorteilen und Merkmalen ist es auch möglich, dass eine Rotation eines beziehungsweise mehrerer, vorzugsweise zwei, (überlagerter) Teilstrahlen erreicht werden kann, die sowohl zentrisch als auch azentrisch sein kann. Durch die Bearbeitungsvorrichtung kann eine eindimensionale oder zweidimensionale Strahlablenkung zur richtungsveränderlichen Lasereinstrahlung realisiert werden.

Durch die erfindungsgemäße Bearbeitungsvorrichtung wird es weiterhin möglich, einen Linearscann oder eine Lininefokussierung des Laserstrahls mit einer Drehbewegung zu kombinieren.

Insbesondere wird es mit der erfindungsgemäßen Bearbeitungsvorrichtung möglich, eine Radienbearbeitung mit zentrischem oder azentrischem Drehpunkt vorzunehmen. Dabei kann eine Azentrizität vorteilhaft an den Radius einer Ecke angepasst werden. Das bedeutet, dass die Bahnbewegung allein durch eine Drehbewegung des Optikelements realisiert wird.

Die Strahlablenkung kann auf unterschiedliche Weise ausgebildet sein. Beispielsweise, jedoch nicht ausschließlich kann eine mäanderförmige oder linienförmige oder zick-zack-linienförmige Strahlablenkung realisiert werden.

Beispielsweise kann erreicht werden, dass eine zweidimensionale Strahlablenkung mit einer rotierenden Spiegelanordnung überlagert wird. Alternativ könnte eine Strahlablenkung mit zwei rotierenden Linear-Scannern, oder eine Rotation einer Linienfokussierung realisiert werden.

Vorteilhaft kann eine Rotation/Linearbewegung der Bearbeitungsvorrichtung (also der Laserstrahlung) und/oder eine Rotation/Linearbewegung des zu bearbeitenden Werkstücks oder eine Kombination der Rotation/Linearbewegung von Bearbeitungsvorrichtung und Werkstück realisiert werden.

Vorteilhaft kann eine Steuereinrichtung vorgesehen sein, die die Drehbewegung des Optikelements steuert. Vorteilhaft kann eine einzige Steuereinrichtung vorgesehen sein, die sowohl für die Veränderung der Orientierung der Scannrichtung als auch für die Steuerung des Optikelements verantwortlich ist. Es sind auch separate Steuereinrichtungen denkbar, die dann miteinander kommunizieren. Vorteilhaft kann im Optikelement weiterhin wenigstens ein Sensorelement vorgesehen sein, mittels dessen die Drehung ermittelt werden kann. Auf diese Weise wird es möglich, eine Positionsrückmeldung des Drehwinkels an die Scannersteuerung zu realisieren, oder umgekehrt.

Vorteilhaft können Einrichtungen vorgesehen sein, um den Prozess Online zu überwachen. Beispielsweise können Mittel vorgesehen sein, um eine Online-Prozessüberwachung durch intensitätsabhängige Prozesssignale (insbesondere integrale optische Leuchtdichte des Plasmas oder "Iaserinduced breakdown spectroscopy LIBS) zu generieren, etwa in Form einer Spektralanalyse des Plasmaleuchtens. Ebenso können Mittel vorgesehen sein, um, vorteilhaft online, Restverschmutzungen und/oder lokale Oberflächendefekte und/oder Gussfehler und/oder lokale Veränderungen des Absorptionsgrades und/oder die Laserstrahlintensität auf der Bauteiloberfläche zu detektieren.

Durch die erfindungsgemäße Bearbeitungsvorrichtung wird insbesondere eine kontinuierliche Bearbeitung von Radien durch Linearbewegung und Rotation und Anpassung der Scannrichtung ermöglicht.

Gemäß einem weiteren Aspekt der Erfindung wird eine Laserbearbeitungseinrichtung zum Bearbeiten eines Werkstücks mittels Laserstrahlung, bereitgestellt, die gekennzeichnet ist durch wenigstens eine Laserquelle zum Erzeugen eines gepulsten Laserstrahls und eine wie vorstehend beschriebene erfindungsgemäße Bearbeitungsvorrichtung zum gezielten Ablenken und Positionieren des Laserstrahls auf dem Werkstück. Bezüglich der Ausgestaltung und Funktionsweise der Bearbeitungsvorrichtung wird deshalb auf die vorstehenden Ausführungen vollinhaltlich Bezug genommen und verwiesen.

Grundsätzlich ist es ausreichend, wenn eine einzige Laserquelle eingesetzt wird. Denkbar sind natürlich auch zwei oder mehr Laserquellen. Wie im Zusammenhang mit dem erfindungsgemäßen Verfahren weiter unten noch erläutert wird, ist es insbesondere dann, wenn eine Oberfläche zur Verwendung als Klebefläche vorbehandelt wird, wichtig, dass die Oberfläche zunächst gereinigt und anschließend umgeschmolzen wird. Dies kann bei unterschiedlichen Laserintensitäten geschehen. Wenn eine einzige Laserquelle verwendet wird, muss diese für verschiedene Laserintensitäten, oder aber für eine Laserintensität, bei der sowohl gereinigt als auch umgeschmolzen werden kann, ausgebildet sein. So kann das Verfahren einstufig bei nur einer Überfahrt durchgeführt werden. Bei einem zweistufigen Verfahren mit zweifacher Überfahrt kann zunächst eine Reinigung bei einer ersten Intensität und anschließend eine Umschmelzung bei einer zweiten Intensität erfolgen. Dies kann beispielsweise durch eine in der Intensität veränderliche Laserquelle, oder aber durch zwei Laserquellen unterschiedlicher Intensitäten realisiert werden.

Dabei ist die Erfindung grundsätzlich nicht auf bestimmte Typen von Laserquellen beschränkt. Nachfolgend werden einige vorteilhafte Parameter für die einzusetzende Laserquelle beschrieben.

Vorteilhaft kann die Laserquelle als gepulster Laser zur Erzeugung von Laserpulsen mit Pulsdauern im Bereich von 5ns bis 500ns ausgebildet sein.

In weiterer Ausgestaltung kann die Laserquelle zur Erzeugung von Laserintensitäten von größer/gleich 5 Megawatt/cm² ausgebildet sein. Vorteilhaft können die Intensitäten im Bereich von 5 Megawatt/cm² bis 500 Megawatt/cm² liegen. Intensitäten für den Reinigungsprozess können beispielsweise im Bereich von 5 Megawatt/cm² bis 100 Megawatt/cm² liegen, während Intensitäten für den Umschmelzprozess im Bereich von 20 Megawatt/cm² bis 500 Megawatt/cm² liegen können.

Eine Toleranz der Intensität, etwa bei unterschiedlichen beziehungsweise wechselnden Einstrahlwinkeln kann vorteilhaft durch eine angepasste Strahlformung ausgeglichen werden.

Vorteilhaft kann die Bearbeitungsvorrichtung zur Erzeugung einer Pulsüberlappung von größer 0% ausgebildet sein, vorzugsweise zwischen 10% und 90%, ganz besonders bevorzugt von 50%. Bei der Pulsüberlappung handelt es sich dabei um folgendes Phänomen. Üblicherweise treffen die Laserspots mit runder oder ovaler Geometrie auf eine Oberfläche auf. Dabei ist es für eine gute Bearbeitung vorteilhaft, die Abstände zwischen zwei benachbarten Spots möglichst gering zu wählen. Besonders vorteilhaft sollen die Abstände so gering sein, dass keine Flächen auf der Oberfläche mehr existieren, die nicht mit Laserspots beschossen werden. Eine Pulsüberlappung ist dann gegeben, wenn es zu einer zumindest teilweisen Überschneidung beziehungsweise Überlagerung (Überlappung) der Laserspots kommt. Je größer die prozentuale Überlappung ist, desto vollständiger kann die Oberfläche beschossen werden. Die Pulsüberlappung ist hierbei wie folgt definiert: Pulsüberlapp = 1 - Pulsabstand / Spotdurchmesser. Der Spotdurchmesser ist dabei der Durchmesser des Laserspots.

Beschrieben wird auch ein Verfahren zum Bearbeiten einer Oberfläche eines Werkstücks, insbesondere zur Klebevorbehandlung einer Oberfläche eines Werkstücks, mittels Laserstrahlung, bei dem mittels eines gepulsten Lasers erzeugte Laserstrahlung auf die zu bearbeitende Oberfläche auftrifft, bei dem in einem ersten Schritt auf der Oberfläche befindliche Verunreinigungen durch die auftreffende Laserstrahlung entfernt werden und bei dem in einem zweiten Schritt die oberflächennahe Schicht des Werkstücks mittels der auftreffenden Laserstrahlung derart angeschmolzen und anschließend wieder abgekühlt wird, dass eine vollständige Umschmelzung der oberflächennahen Schicht erfolgt.

Das Verfahren ist kein Gegenstand der vorliegenden Erfindung und wird von den Ansprüchen nicht abgedeckt.

Bei dem Verfahren handelt es sich um ein kombiniertes zweistufiges Verfahren, wobei die einzelnen Stufen entweder nacheinander oder aber gleichzeitig ausgeführt werden können. In beiden Stufen wird eine Laserstrahlung eingesetzt, um zu den gewünschten Resultaten zu gelangen. Bei der ersten Stufe handelt es sich um eine Reinigungsstufe, bei der Verunreinigungen jeglicher Art mittels der Laserstrahlung von der Oberfläche entfernt werden. Ein für die Reinigungsstufe eingesetzter Laserstrahl hat vorzugsweise eine Intensität von 5 Megawatt/cm² bis 100 Megawatt/cm². Bei der zweiten Stufe handelt es sich um den Anschmelz- und Umschmelzvorgang, bei dem es zur Umschmelzung der Oberfläche kommt. Ein für diesen Vorgang eingesetzter Laserstrahl hat vorzugsweise eine Intensität von 20 Megawatt/cm² bis 500 Megawatt/cm². Wenn sich der Laserstrahl in einem Überlappungsbereich der vorstehend genannten Intensitäten befindet, können die beiden Verfahrensstufen in einem einzigen Schritt, beispielsweise in einer einzigen

Überfahrt, ausgeführt werden. Ansonsten wird das Verfahren zweistufig, gegebenenfalls mit zwei Überfahrten durchgeführt. Es wäre auch denkbar, eine einzige Überfahrt mit zwei hintereinander geschalteten Laserquellen unterschiedlicher Intensitäten durchzuführen.

Vorteilhaft kann das Verfahren derart ausgebildet sein, dass beide Verfahrensschritte innerhalb eines einzigen Bearbeitungsschritts ausgeführt werden. In anderer Ausgestaltung kann vorgesehen sein, dass die beiden Verfahrensschritte innerhalb von zwei Bearbeitungsschritten ausgeführt werden.

Vorzugsweise können von der Laserquelle Laserintensitäten von größer/gleich 5 Megawatt/cm² erzeugt werden.

Das Verfahren eignet sich insbesondere zum Bearbeiten einer metallischen Oberfläche. Das erfindungsgemäße Verfahren eignet sich insbesondere zum Vorbehandeln von Klebeflächen, insbesondere dann, wenn diese aus Aluminium oder einem anderen Leichtmetall gebildet sind. Ein Grund für die Schaffung besonders guter Klebeflächen, bei denen durch die Umschmelzung insbesondere eine sehr gute Alterungsbeständigkeit erzielt wird, liegt in der erfindungsgemäßen Kombination zweier Laserprozesse mit unterschiedlichen Parameterbereichen.

Zum einen kann die Oberfläche des Werkstücks durch einen Laser bearbeitet werden, indem beim Auftreffen der Laserstrahlen auf der Oberfläche befindliche Verunreinigungen und Oxidschichten entfernt werden. Zusätzlich wird die oberflächennahe Schicht angeschmolzen und neu verschmolzen, was zu einer vollständigen Umschmelzung führt. Eine derartige Umschmelzung kann vorteilhaft bis in eine Schichttiefe von einigen 10tel bis einigen 10µm erfolgen. Diese Umschmelzung führt insbesondere zu einer verbesserten Altersbeständigkeit der Oberfläche.

Damit dies erreicht werden kann, müssen für die Laserstrahlung bestimmte Parameter gewählt werden.

Neben der bereits erwähnten Intensitäten bildet die Pulsüberlappung einen weiteren wichtigen Parameter. Durch die entsprechend gewählte Pulsüberlappung wird es zunächst möglich, dass die Oberfläche des Werkstücks vollständig umgeschmolzen werden kann, was die weiter oben beschriebenen vorteilhaften Eigenschaftsänderungen des Materials hervorruft. Weiterhin können auch komplexe Konturen bearbeitet werden, insbesondere auch im Zusammenhang mit einem Wechsel der Laufrichtung, da das Material vollständig bearbeitet werden kann. Vorteilhaft ist vorgesehen, dass die Laserpulse mit einer Pulsüberlappung von größer 0% auf die zu bearbeitende Oberfläche auftreffen. Bezüglich der Pulsüberlappung wird auch auf die vorstehenden Ausführungen zur Laserbearbeitungseinrichtung Bezug genommen und verwiesen. Vorteilhaft können die Laserpulse mit einer Pulsüberlappung im Bereich von 10% bis 90%, vorzugsweise 50%, auf die zu bearbeitende Oberfläche auftreffen. Weiterhin kann, wie weiter unten noch näher erläutert wird, eine schnelle Abkühlungsrate von Vorteil sein.

Durch das Verfahren kommt es zunächst zu einem Anschmelzen/Umschmelzen der Oberfläche. Weiterhin kann durch eine geeignete Pulsüberlappung eine durchgängige Umwandlungsschicht erzielt werden. Es wird eine laserinduzierte Oxidschicht beziehungsweise eine laserinduzierte (chemische) Modifikation der Oberfläche erreicht. Silikatausscheidungen oder Ausscheidungen von Legierungsteilen wie auch kristalline Ausscheidungen im Allgemeinen können aufgelöst werden.

Vorteilhaft kann das Verfahren mittels einer wie vorstehend beschriebenen erfindungsgemäßen Bearbeitungsvorrichtung oder mittels einer wie vorstehend beschriebenen erfindungsgemäßen Laserbearbeitungseinrichtung durchgeführt werden. Zur Durchführung und Funktionsweise des Verfahrens wird daher ebenfalls auf die vorstehenden Ausführungen zur Bearbeitungsvorrichtung sowie zur Laserbearbeitungseinrichtung vollinhaltlich Bezug genommen und verwiesen, so dass die dort beschriebenen Verfahrensmerkmale auch im Zusammenhang mit dem Verfahren zu lesen sind.

Durch das Verfahren wird insbesondere eine direkte Fokussierung oder Faserkopplung und/oder eine vorteilhafte Strahlhomogenisierung und/oder eine vorteilhafte Anpassung der Strahlgeometrie an die Geometrie der zu bearbeitenden Oberfläche ermöglicht.

Vorteilhaft kann der Laser Laserpulse mit einer Pulsdauer im Bereich zwischen 5ns und 500ns erzeugen.

Vorzugsweise wird die oberflächennahe Schicht des Werkstücks nach der Anschmelzung mit einer Abkühlrate von 500 bis 20.000 Kelvin/Sekunde abgekühlt. Durch die extrem kurzen Erstarrungszeiten kann besonders vorteilhaft ein amorphes beziehungsweise feinkristallines Gefüge erzeugt werden. Durch die Veränderungen oder Modifikationen in der Kristallstruktur kann eine Verbesserung der Oberflächeneigenschaften zum Beispiel der Klebefestigkeiten, der Klebebeständigkeiten oder der Klebe-Alterungsbeständigkeiten bewirkt werden.

Auch wenn die vorliegende Erfindung nicht auf bestimmte Anwendungsgebiete beschränkt ist, so kann/können die erfindungsgemäße Bearbeitungsvorrichtung und/oder die erfindungsgemäße Laserbearbeitungseinrichtung und/oder das Verfahren besonders vorteilhaft zum Vorbehandeln von Klebeflächen, insbesondere von Aluminiumflächen, verwendet werden.

Die Erfindung wird nun anhand von Ausführungsbeispielen unter Bezugnahme auf die beiliegenden Zeichnungen näher erläutert. Es zeigen
- Figuren 1 und 2: in perspektivischer Ansicht und Seitenansicht eine erfindungsgemäße Bearbeitungsvorrichtung;
- Figuren 3 bis 5: verschiedene Ansichten einer Scannereinrichtung der Bearbeitungsvorrichtung;
- Figuren 6 und 7: verschiedene Ansichten einer Motoreinrichtung der Bearbeitungsvorrichtung; und
- Figuren 8 bis 10: verschiedene Detailansichten eines Optikelements der Bearbeitungsvorrichtung.

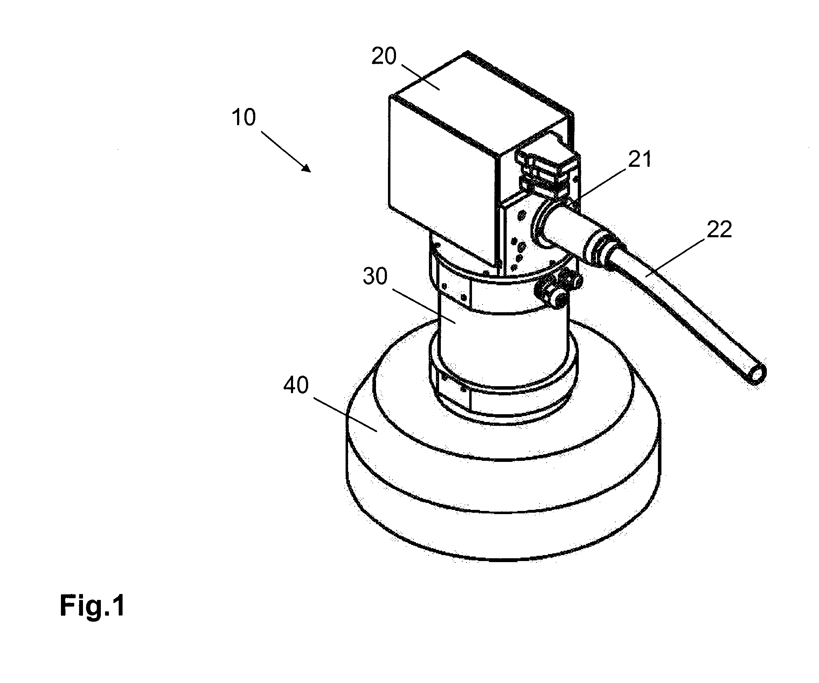

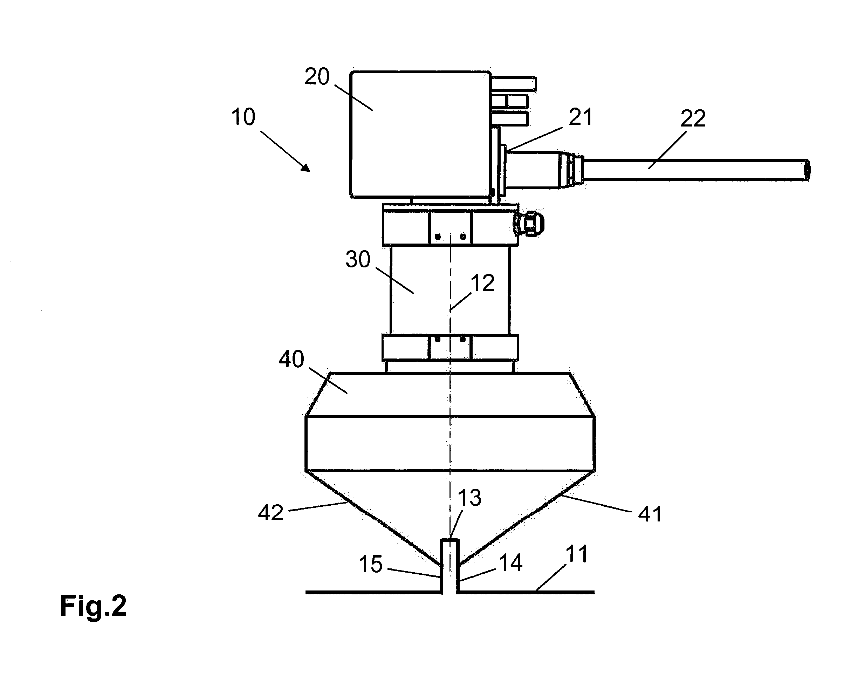

In den Figuren 1 und 2 ist eine Bearbeitungsvorrichtung 10 dargestellt, mittels derer die Oberfläche 11 eines metallischen Werkstücks, das beispielsweise aus Aluminium gefertigt sein soll, bearbeitet werden kann. Die Bearbeitung erfolgt dabei mittels Laserstrahlung. Insbesondere sollen mit der Bearbeitungsvorrichtung 10 Fügekanten von Gehäuseteilen mittels Laser gereinigt werden, damit nachfolgend ein Klebeprozess durchgeführt werden kann. Die Fügekanten stellen in diesem Fall die Klebeflächen dar. Die Klebeflächen, die beispielsweise umlaufend sind und somit einen kurvenförmigen Verlauf haben, können bei einem Gehäuseteil als Nut oder dergleichen ausgebildet sein, während sie bei dem anderen Gehäuseteil als Feder oder Steg ausgebildet sind. Die Klebung erfolgt in der Regel derart, dass eine Feder beziehungsweise ein Steg in die korrespondierende Nut eingesetzt wird. Der Kleber befindet sich in der Nut oder auf den Flanken der Feder oder des Stegs. In Figur 2 ist auf der Oberfläche 11 des Werkstücks ein Steg 13 mit zwei Flanken 14, 15 dargestellt, wobei mit der Bearbeitungsvorrichtung 10 die Flanken 14, 15 bearbeitet werden sollen.

Um eine besonders vorteilhafte Klebung zu erreichen, müssen deshalb die Flanken der Feder beziehungsweise des Stegs, die dazugehörenden Grate und auch der Nutgrund gereinigt und vorbehandelt werden. Um die Klebefestigkeiten verbessern zu können, was insbesondere auch mit einer Verbesserung der Altersbeständigkeit einhergeht, muss eine vollständige Umschmelzung der oberflächennahen Schicht erreicht werden. Die kann mit der nachfolgend näher erläuterten Bearbeitungsvorrichtung realisiert werden.

Zunächst verfügt die Bearbeitungsvorrichtung 10 über eine Scannereinrichtung 20, die eine Anzahl von Anschlüsse aufweist. Bei einem der Anschlüsse handelt es sich um einen Anschluss 21 für einen Lichtleiter 22, der die Scannereinrichtung 20 mit einer nicht dargestellten Laserquelle verbindet. Die Scannereinrichtung 20 ist fest in der Bearbeitungsvorrichtung 10 montiert, das heißt, sie ist in dieser nicht beweglich, insbesondere nicht verdrehbar.

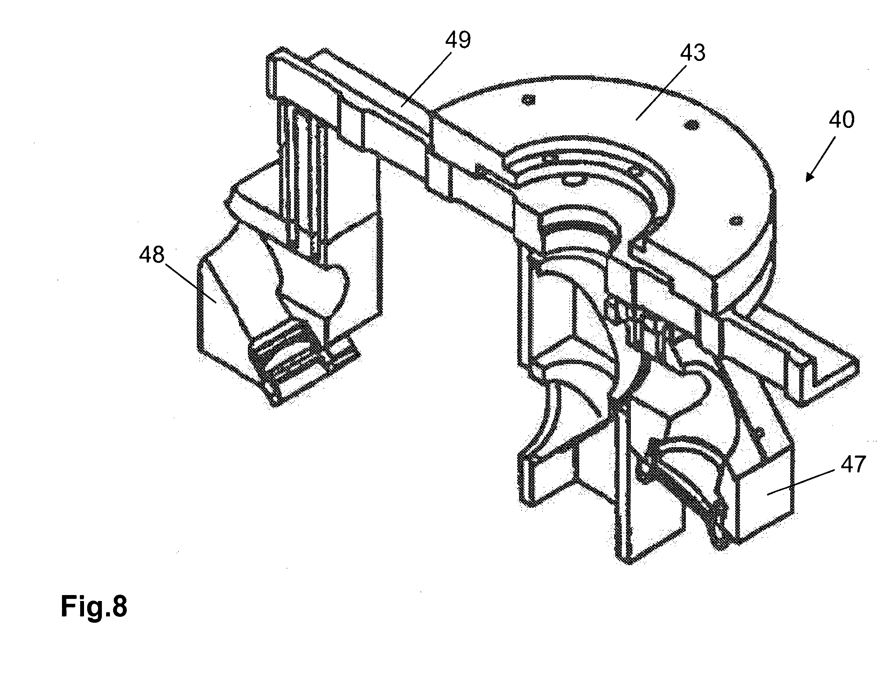

Um einen Aufbau entlang einer Achse 12 zu ermöglichen, ist der Scannereinrichtung 20 nachgeordnet eine Motoreinrichtung 30 vorgesehen. Über diese Motoreinrichtung 30 lässt sich ein Optikelement 40 rotieren, das im Zusammenhang mit den Figuren 8 bis 10 noch näher erläutert wird. In dem Optikelement 40 wird der Laserstrahl in zwei oder mehr Teilstrahlen, im vorliegenden Beispiel zwei Teilstrahlen 41, 42 aufgeteilt. Die Teilstrahlen treffen unter einem bestimmten Winkel und mit einer bestimmten Fokussierung auf die Oberfläche des Bauteils 11 auf. Gemäß Figur 1 trifft dabei der Teilstrahl 41 auf die Flanke 14, während der Teilstrahl 42 auf die Flanke 15 trifft.

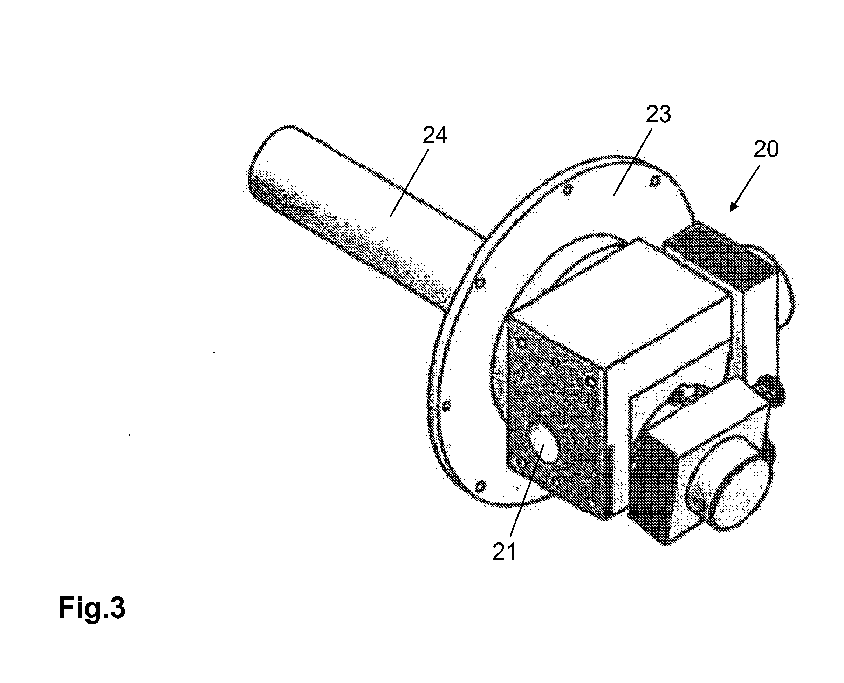

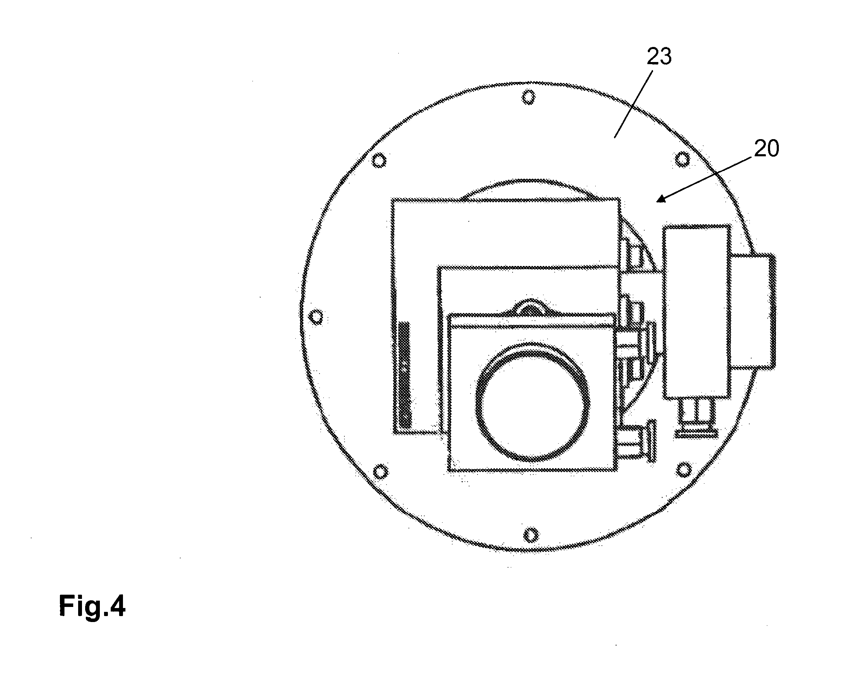

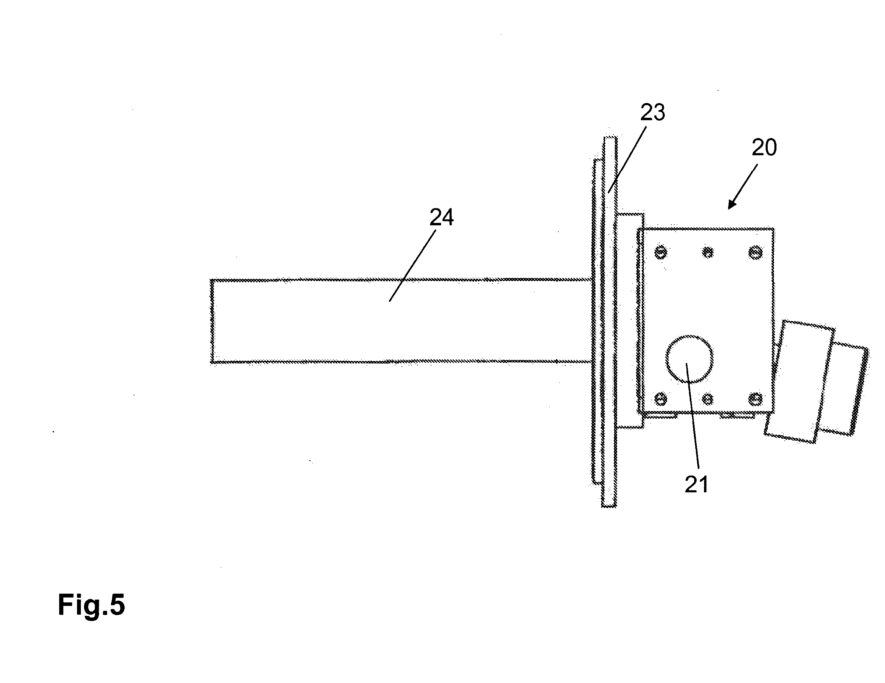

Nachfolgend wird die Scannereinrichtung 20 im Zusammenhang mit den Figuren 3 bis 5 näher erläutert. Die eigentliche Scannereinrichtung 20 dient zum Formen eines gewünschten Laserstrahls beziehungsweise einer gewünschten Laserstrahlgeometrie. Das von der Laserquelle (nicht dargestellt) abgegebene Licht tritt über den Anschluss 21 in die Scannereinrichtung 20 ein. Die Scannereinrichtung 20 soll in der Bearbeitungsvorrichtung fest montiert sein, Dazu ist ein Flansch 23 vorgesehen, mittels dessen die Scannereinrichtung 20 an einem nicht drehbaren Teil der Motoreinrichtung 30 befestigt werden kann. In der Scannereinrichtung 20 wird der Laserstrahl in seiner gewünschten Geometrie geformt und anschließend durch ein Leitrohr 24 zum Optikelement 40 weitergeleitet. Das Leitrohr 24 dient dazu, den Laserstrahl durch die Motoreinrichtung 30 (siehe Figuren 1 und 2) hindurchzuleiten, ohne dass eine Wechselwirkung des Strahls mit der Motoreinrichtung 30 auftreten kann.

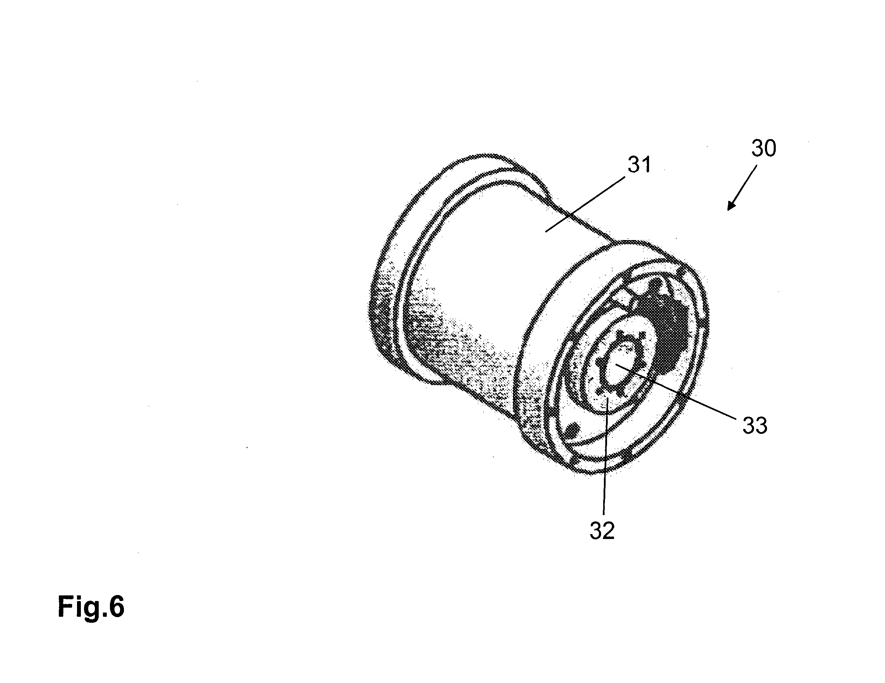

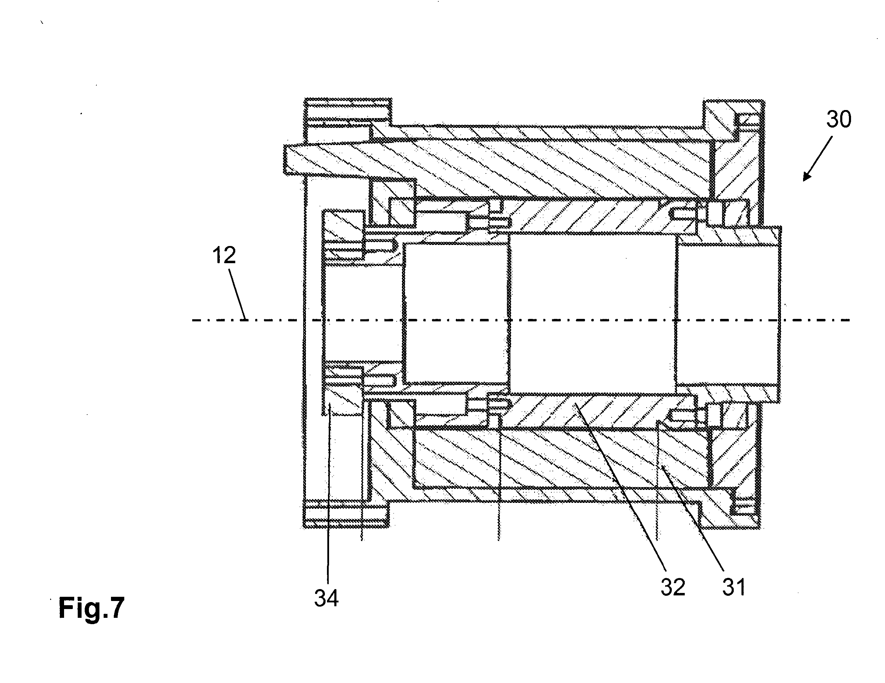

Wie in den Figuren 6 und 7 dargestellt ist, verfügt die Motoreinrichtung 30 zunächst über einen feststehenden äußeren Teil, den Stator 31. An diesem ist die Scannereinrichtung 20 mit ihrem Flansch 23 angeordnet. Weiterhin verfügt die Motoreinrichtung 30 über einen innen liegenden Rotor 32, der mit dem Optikelement 40 (siehe Figuren 1 und 2) verbunden ist, und über den das Optikelement 40 um die Drehachse 12 rotiert werden kann. Zum Rotieren des Rotors 32 kann ein Drehgeber 34 vorgesehen sein. Der Rotor 32 weist weiterhin eine Durchführung 33 auf, durch die das Leitrohr 24 der Scannereinrichtung 20 (siehe Figuren 3 bis 5) hindurch gesteckt werden kann.

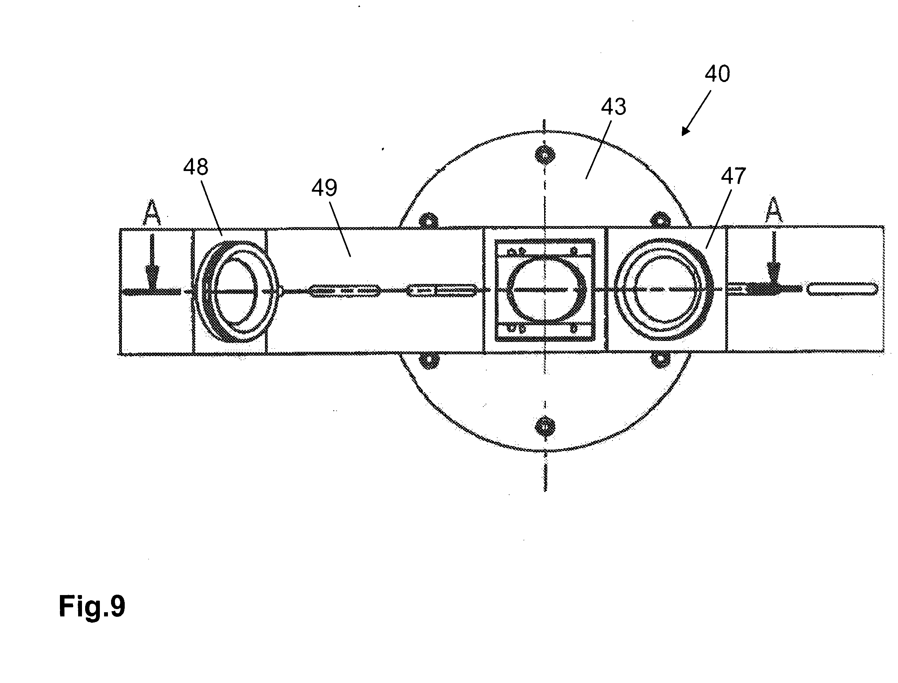

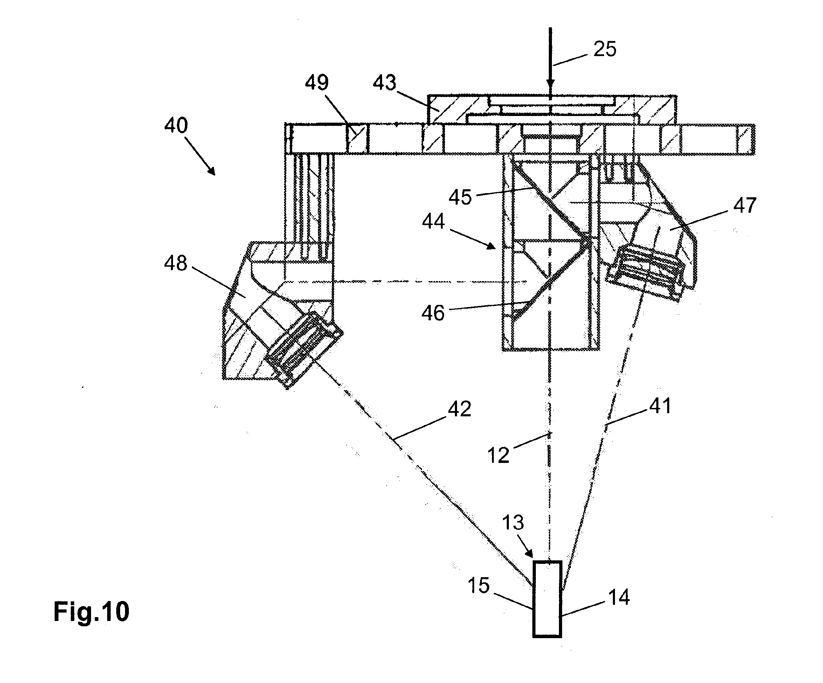

In den Figuren 8 bis 10 ist das Optikelement 40 in größerem Detail dargestellt. Dabei stellt die Figur 10 eine Schnittansicht entlang der in Figur 9 dargestellten Schnittlinie A-A dar. Wie sich aus den Figuren 8 bis 10 ergibt, verfügt das Optikelement 40 zunächst über einen Flansch 43, mittels dessen es am Rotor 32 der Motoreinrichtung 30 (siehe Figuren 6 und 7) befestigt wird. Das Optikelement 40 verfügt ferner über einen Strahlteiler 44 mit Umlenkelementen 45, 46, beispielsweise geeignete Spiegel. Das Umlenkelement 45 ist vorteilhaft teildurchlässig ausgebildet, während das Umlenkelement 46 vorteilhaft vollständig umlenkend ausgebildet ist. Durch den Strahlteiler 44 wird der die Scannereinrichtung 20 verlassende Laserstrahl 25 in die beiden Teilstrahlen 41 und 42 aufgeteilt. Dabei ist vorgesehen, dass beide Teilstrahlen 41, 42 die gleiche Intensitäten haben sollen, die in etwa der Hälfte der Strahlintensität des Laserstrahls 25 entsprechen. Damit die Teilstrahlen 41, 42 auf die zu bearbeitende Oberfläche treffen können, beispielsweise den Steg 13, verfügt das Optikelement 40 über zwei Abstrahlköpfe 47, 48. Diese sind beabstandet voneinander angeordnet, was im vorliegenden Beispiel mittels eines Tragarms 49 erfolgen kann. Dabei können die beiden Tragarmteile in Bezug auf die Drehachse 12 unterschiedlich lang ausgebildet sein.

Nachfolgend wird nun die Funktionsweise der Bearbeitungsvorrichtung 10 näher beschrieben. In der nicht dargestellten Laserquelle werden Laserpulse erzeugt, die vorteilhaft eine Pulsdauer im Bereich von 5ns und 500ns aufweisen. Die Laserintensität soll größer/gleich 5 Megawatt/cm² sein. Das Laserlicht tritt über den Lichtleiter 22 und den Anschluss 21 in die Scannereinrichtung 20 ein, wo die gewünschte Laserstrahlgeometrie geformt wird, etwa in Linienform. Das Laserlicht verlässt die Scannereinrichtung 20 über das Leitrohr 24 als geformter Laserstrahl 25 und tritt anschließend in das Optikelement 40 ein. Dort wird es durch den Strahlteiler 44 in zwei Teilstrahlen 41, 42 aufgeteilt, wobei jeder Teilstrahl 41, 42 eine Intensität von 50% des Ausgangs-Laserstrahls 25 hat. Während die Scannereinrichtung 20 in der Bearbeitungsvorrichtung 10 fest montiert ist, kann das Optikelement 40 über die Motoreinrichtung 30 um die Rotationsachse 12 gedreht, beispielsweise rotiert werden. Die beiden Teilstrahlen 41, 42 treffen auf der Oberfläche 11 des zu bearbeitenden Werkstücks auf. Im vorliegenden Beispiel treffen die beiden Teilstrahlen 41, 42 jeweils auf einer Flanke 14, 15 des zu bearbeitenden Stegs 13 auf, so dass eine Bearbeitung auf beiden Seiten des Stegs 13 erfolgen kann. Da die Oberfläche für einen späteren Klebeprozess vorbehandelt werden soll, werden die beiden Flanken 14, 15 des Stegs 13 angeschmolzen und vollständig umgeschmolzen, und zwar in einer Schichttiefe von einigen 10tel bis einigen 10µm. Zusätzlich sind die Parameter des Lasers so eingestellt, dass die erzeugten Laserpulse eine Überlappung von größer 0%, vorzugsweise von 10% bis 90%, besonders bevorzugt von 50% aufweisen. Dadurch kann die Oberfläche in ihrer Gesamtheit bearbeitet werden, ohne dass nicht bearbeitete Stellen zurückbleiben.

Da derartige Stege 13 in der Regel einen kurvenförmigen Verlauf aufweisen, ist es erforderlich, dass auch die Ausrichtung der auf die Flanken 14, 15 auftreffenden Teilstrahlen 41, 42 entsprechend der Kurvenführung nachgestellt wird. Dies wird zum einen durch die Rotierbarkeit des Optikelements 40 erreicht. Ebenso muss aber auch die Scannrichtung des in der Scanneinrichtung 20 erzeugten Laserstrahls verstellt werden. Da die Scanneinrichtung 20 fest in der Bearbeitungsvorrichtung 10 montiert ist und daher nicht verdreht werden kann, verfügt die Scanneinrichtung 20 über eine nicht näher dargestellte Steuereinrichtung, über die die Orientierung der Scannrichtung des in der Scanneinrichtung 20 geformten Laserstrahls verändert werden kann. Vorteilhaft geschieht dies in Übereinstimmung mit der Rotation des Optikelements 40.

Durch das Verfahren wird somit eine kontinuierliche Bearbeitung von Radien durch Linearbewegung und Rotation sowie einer Anpassung der Scanneinrichtung ermöglicht.

### Bezugszeichenliste

- 10: Bearbeitungsvorrichtung
- 11: Werkstückoberfläche
- 12: Achse/Drehachse
- 13: Steg
- 14: Flanke
- 15: Flanke
- 20: Scannereinrichtung
- 21: Anschluss
- 22: Lichtleiter
- 23: Flansch
- 24: Leitrohr
- 25: Laserstrahl
- 30: Motoreinrichtung
- 31: Stator
- 32: Rotor
- 33: Durchführung
- 40: Optikelement
- 41: Teilstrahl
- 42: Teilstrahl
- 43: Flansch
- 44: Strahlteiler
- 45: Umlenkelement (teildurchlässig)
- 46: Umlenkelement (vollständig umlenkend)
- 47: Abstrahlkopf
- 48: Abstrahlkopf
- 49: Tragarm

## Patentansprüche

1. Vorrichtung zum Bearbeiten einer Oberfläche (11) eines Werkstücks, insbesondere eines metallischen Werkstücks, mittels Laserstrahlung, **gekennzeichnet durch** eine in der Bearbeitungsvorrichtung (10) drehunbeweglich montierte Scannereinrichtung (20) sowie ein um eine Rotationsachse (12) bewegliches Optikelement (40), mittels derer ein auf die zu bearbeitenden Oberfläche abzulenkender und zu positionierender Laserstrahl (25) mit einer definierten Laserstrahlgeometrie formbar ist, wobei das Optikelement (40) der Scannereinrichtung (20) in Strahlrichtung des Laserstrahls (25)nachgeordnet ist, und eine Steuereinrichtung zum Verändern der Orientierung der Scannrichtung der Strahlablenkung des Laserstrahls (25) in Übereinstimmung mit der Rotation des Optikelements (40).

2. Bearbeitungsvorrichtung nach Anspruch 1, **dadurch gekennzeichnet, dass** das Optikelement (40) eine Strahlteilereinrichtung (44) zum Aufteilen des Laserstrahls (25) in zwei oder mehr Teilstrahlen (41, 42), insbesondere in Teilstrahlen (41, 42) gleicher Intensität, und zum Ablenken und Positionieren der Teilstrahlen (41, 42) auf die zu bearbeitende Oberfläche (11) aufweist.

3. Bearbeitungsvorrichtung nach Anspruch 1 oder 2, **dadurch gekennzeichnet, dass** diese zur Bewegung des Optikelements (40) eine Motoreinrichtung (30) aufweist, dass die Motoreinrichtung (30) insbesondere einen Stator (31) aufweist, der mit der Scannereinrichtung (20) verbunden ist, und dass die Motoreinrichtung (30) insbesondere einen Rotor (32) aufweist, der mit dem Optikelement (40) verbunden ist.

4. Bearbeitungsvorrichtung nach Anspruch 2 oder 3, **dadurch gekennzeichnet, dass** das Optikelement (40) zum Abstrahlen und Positionieren der Teilstrahlen (41, 42) auf der Werkstückoberfläche (11) voneinander beabstandete Abstrahlköpfe (47, 48) aufweist.

5. Bearbeitungsvorrichtung nach einem der Ansprüche 2 bis 4, **dadurch gekennzeichnet, dass** die Fokuslage der Teilstrahlen (41, 42) relativ zum Schnittpunkt der Teilstrahlen (41, 42) variierbar einstellbar ist.

6. Bearbeitungsvorrichtung nach einem der Ansprüche 2 bis 5, **dadurch gekennzeichnet, dass** die Teilstrahlen (41, 42) derart ausgerichtet sind, dass deren Schnittpunkt in der Drehachse (12) des Optikelements (40) liegt.

7. Bearbeitungsvorrichtung nach einem der Ansprüche 2 bis 6, **dadurch gekennzeichnet, dass** das Optikelement (40) zur zentrischen oder azentrischen Überlagerung der Teilstrahlen (41, 42) ausgebildet ist.

8. Bearbeitungsvorrichtung nach einem der Ansprüche 2 bis 7, **dadurch gekennzeichnet, dass** das Optikelement (40) zum Variieren des Einstrahlwinkels der Laser-Teilstrahlen auf der Werkstückoberfläche im Bereich von 0 bis 90 Grad zur Oberflächen-Normalen ausgebildet ist.

9. Laserbearbeitungseinrichtung zum Bearbeiten eines Werkstücks mittels Laserstrahlung, **gekennzeichnet durch** wenigstens eine Laserquelle zum Erzeugen eines gepulsten Laserstrahls und eine Bearbeitungsvorrichtung (10) nach einem der Ansprüche 1 bis 8 zum gezielten Ablenken und Positionieren des Laserstrahls auf dem Werkstück.

10. Laserbearbeitungseinrichtung nach Anspruch 9, **dadurch gekennzeichnet, dass** die Laserquelle als gepulster Laser zur Erzeugung von Laserpulsen mit Pulsdauern im Bereich von 5ns bis 500ns ausgebildet ist.

11. Laserbearbeitungseinrichtung nach Anspruch 9 oder 10, **dadurch gekennzeichnet, dass** die Laserquelle zur Erzeugung von Laserintensitäten von größer/gleich 5 Megawatt/cm² ausgebildet ist.

12. Laserbearbeitungseinrichtung nach einem der Ansprüche 9 bis 11, **dadurch gekennzeichnet, dass** die Bearbeitungsvorrichtung (10) zur Erzeugung einer Pulsüberlappung von größer 0% ausgebildet ist.

13. Verwendung einer Bearbeitungsvorrichtung nach einem der Ansprüche 1 bis 8 oder einer Laserbearbeitungseinrichtung nach einem der Ansprüche 9 bis 12 zum Vorbehandeln von Klebeflächen.

## Claims

1. An apparatus for the working of a surface (11) of a workpiece, in particular a metal workpiece, by means of laser radiation, **characterized by** a scanner device (20) mounted in a rotationally immovable manner in the working apparatus (10) as well as an optics element (40) movable around an axis of rotation (12), by means of which a laser beam (25) that is to be deflected and positioned on the surface to be worked can be shaped with a defined laser beam geometry, the optics element (40) being arranged downstream of the scanner device (20) in the beaming direction of the laser beam (25), and a control apparatus for changing the orientation of the scanning direction for the beam deflection of the laser beam (25) in correspondence with the rotation of the optics element (40).

2. The working apparatus according to claim 1, further **characterized in that** the optics element (40) has a beam splitter device (44) for splitting the laser beam (25) into two or more beam parts (41, 42), in particular, into beam parts (41, 42) of equal intensity, and for deflecting and positioning the beam parts (41, 42) on the surface (11) to be worked.

3. The working apparatus according to claim 1 or 2, further **characterized in that** it has a motor system (30) for moving the optics element (40), that the motor system (30) in particular has a stator (31), which is connected to the scanner device (20), and that the motor system (30), in particular, has a rotor (32), which is connected to optics element (40).

4. The working apparatus according to claim 2 or 3, further **characterized in that** the optics element (40) has radiating heads (47, 48), which are distanced from one another, for irradiating and positioning the beam parts (41, 42) on the workpiece surface (11).

5. The working apparatus according to anyone of claims 2 to 4, further **characterized in that** the focus position of the beam parts (41, 42) is variably adjustable relative to the point of intersection of the beam parts (41, 42).

6. The working apparatus according to anyone of claims 2 to 5, further **characterized in that** the beam parts (41, 42) are aligned in such a way that their point of intersection lies in the axis of rotation (12) of the optics element (40).

7. The working apparatus according to anyone of claims 2 to 6, further **characterized in that** the optics element (40) is designed for centric or non-centric superimposition of the beam parts (41, 42).

8. The working apparatus according to anyone of claims 2 to 7, further **characterized in that** the optics element (40) is designed for varying the angle of incidence of the laser beam parts on the workpiece surface in the range of 0 to 90 degrees relative to the surface normal line.

9. A laser working assembly for working a workpiece by means of laser radiation, **characterized by** at least one laser source for generating a pulsed laser beam and a working apparatus according to anyone of claims 1 to 8 for the targeted deflecting and positioning of the laser beam on the workpiece.

10. The laser working assembly according to claim 9, further **characterized in that** the laser source is designed as a pulsed laser for generating laser pulses with pulse durations in the range of 5ns to 500ns.

11. The laser working assembly according to claim 9 or 10, further **characterized in that** the laser source is designed for generating laser intensities of greater than/equal to 5 megawatts/cm².

12. The laser working assembly according to anyone of claims 9 to 11, further **characterized in that** the working apparatus (10) is designed for generating a pulse overlap of greater than 0%.

13. Use of a working apparatus according to anyone of claims 1 to 8 or of a laser working assembly according to anyone of claims 9 to 12 for the pre-treatment of adherends.

## Revendications

1. Dispositif de traitement d'une surface (11) d'une pièce à usiner, en particulier d'une pièce à usiner métallique, au moyen d'un rayonnement laser, **caractérisé par** un système de balayage (20) monté de manière immobile en rotation dans le dispositif de traitement (10), ainsi que par un élément optique (40) mobile autour d'un axe de rotation (12), lequel permet de former un rayon laser (25) présentant une géométrie de rayon laser définie, à dévier et à positionner sur la surface à traiter, sachant que l'élément optique (40) est disposé en aval du système de balayage (20) dans la direction du rayon laser (25), et **caractérisé par** un système de commande servant à modifier le sens de balayage de la déviation du rayon laser (25) en concordance avec la rotation de l'élément optique (40).

2. Dispositif de traitement selon la revendication 1, **caractérisé en ce que** l'élément optique (40) présente un système de division de rayon (44) servant à diviser le rayon laser (25) en deux rayons partiels (41, 42) ou plus, en particulier en rayons partiels (41, 42) de même intensité, et servant à dévier et à positionner les rayons partiels (41, 42) sur la surface (11) à traiter.

3. Dispositif de traitement selon la revendication 1 ou 2, **caractérisé en ce que** ledit dispositif de traitement présente un système moteur (30) aux fins du déplacement de l'élément optique (40), **en ce que** le système moteur (30) présente en particulier un stator (31) qui est relié au système de balayage (20), et **en ce que** le système moteur (30) présente en particulier un rotor (32), qui est relié à l'élément optique (40).

4. Dispositif de traitement selon la revendication 2 ou 3, **caractérisé en ce que** l'élément optique (40) servant à émettre et à positionner les rayons partiels (41, 42) sur la surface (11) de la pièce à usiner présente des têtes d'émission du rayonnement (47, 48) espacées les unes par rapport aux autres.

5. Dispositif de traitement selon l'une quelconque des revendications 2 à 4, **caractérisé en ce que** la position de focalisation des rayons partiels (41, 42) peut être réglée de manière variable par rapport au point d'intersection des rayons partiels (41, 42).

6. Dispositif de traitement selon l'une quelconque des revendications 2 à 5, **caractérisé en ce que** les rayons partiels (41, 42) sont orientés de telle manière que le point d'intersection desdits rayons partiels se trouve dans l'axe de rotation (12) de l'élément optique (40).

7. Dispositif de traitement selon l'une quelconque des revendications 2 à 6, **caractérisé en ce que** l'élément optique (40) est réalisé aux fins de la superposition des rayons partiels (41, 42), de manière centrée ou décentrée.

8. Dispositif de traitement selon l'une quelconque des revendications 2 à 7, **caractérisé en ce que** l'élément optique (40) est réalisé pour faire varier l'angle d'incidence du rayonnement des rayons laser partiels sur la surface de la pièce à usiner dans la plage allant de 0 à 90 degrés par rapport aux normales des surfaces.

9. Système de traitement par laser servant à traiter une pièce à usiner au moyen d'un rayonnement laser, **caractérisé par** au moins une source laser servant à produire un rayon laser pulsé et par un dispositif de traitement (10) selon l'une quelconque des revendications 1 à 8 servant à dévier et à positionner de manière ciblée le rayon laser sur la pièce à usiner.

10. Système de traitement par laser selon la revendication 9, **caractérisé en ce que** la source laser est réalisée sous la forme d'un laser pulsé servant à produire des impulsions laser présentant une durée d'impulsion comprise dans la plage allant de 5 ns à 500 ns.

11. Système de traitement laser selon la revendication 9 ou 10, **caractérisé en ce que** la source laser est réalisée pour produire des intensités laser supérieures/égales à 5 mégawatts/cm².

12. Système de traitement laser selon l'une quelconque des revendications 9 à 11, **caractérisé en ce que** le dispositif de traitement (10) est réalisé pour produire un chevauchement d'impulsions supérieur à 0 %.

13. Utilisation d'un dispositif de traitement selon l'une quelconque des revendications 1 à 8, ou utilisation d'un système de traitement par laser selon l'une quelconque des revendications 9 à 12 servant à manipuler au préalable des surfaces de collage.
